# EUROPEAN PATENT APPLICATION

(11) **EP 4 848 426 A1**
(43) Date of publication of application: **02.12.2026**
(21) Application number: 24951008.2
(22) Date of filing: 15.08.2024
(51) Int. Cl.: H01M 50/204, H01M 50/509, H01M 10/63, H01M 10/60

(54) **ENERGY STORAGE DEVICE AND ENERGY STORAGE SYSTEM**

(71) Applicant: Contemporary Amperex Technology Co., Limited, Ningde, Fujian 352100 (CN)
(72) Inventor: LI, Qing, Ningde, Fujian 352100 (CN); YE, Weida, Ningde, Fujian 352100 (CN); WU, Kai, Ningde, Fujian 352100 (CN); YU, Dongxu, Ningde, Fujian 352100 (CN); LI, Jinkui, Ningde, Fujian 352100 (CN); HE, Shuangjiang, Ningde, Fujian 352100 (CN); LI, Zhonghong, Ningde, Fujian 352100 (CN); ZHANG, Kaiwen, Ningde, Fujian 352100 (CN)
(74) Representative: Kraus & Lederer PartGmbB
(86) International application number: PCT/CN2024/112387
(87) International publication number: WO 2026/036324

(57) **Abstract**

An energy storage device and an energy storage system. The energy storage device comprises a first module (1) and a second module (2). The first module (1) comprises a first compartment body (11) and a first battery device (12), wherein the first compartment body (11) accommodates the first battery device (12). The second module (2) comprises a second compartment body (20) and a first heat exchange assembly (220), wherein the second compartment body (20) accommodates the first heat exchange assembly (220). The second module (2) is stacked on the upper side of the first module (1), and the second compartment body (20) is connected to the first compartment body (11). In the structure described above, since the energy storage device comprises the first module (1) and the second module (2), which are stacked, and the first module (1) and the second module (2) comprise the first compartment body (11) for accommodating the first battery device (12), and the second compartment body (20) for accommodating the first heat exchange assembly (220), respectively, during assembly of the energy storage device, it is only necessary to connect the first compartment body (11) in the assembled first module (1) to the second compartment body (20) in the assembled second module (2), without needing to install each functional component of the energy storage device at an installation site, thereby being conducive to improving the installation convenience of the energy storage device.

## Description

### TECHNICAL FIELD

The present application relates to the technical field of energy storage apparatuses, and particularly to an energy storage apparatus and an energy storage system.

### BACKGROUND

A first battery apparatus has advantages such as high specific energy and a high power density and is widely used in an energy storage apparatus such as an energy storage container or an energy storage cabinet. The energy storage apparatus can be used in an energy storage power station, a wind power generation system, a solar power generation system, a mobile power system, a temporary power supply system, or the like.

Due to advantages such as large capacity and high degree of integration, energy storage apparatuses are being used in an increasingly wide range of applications. As a result, how to improve the convenience of mounting energy storage apparatuses is attracting increasingly more attention from those skilled in the art.

### SUMMARY OF THE INVENTION

In view of the above problems, the present application provides an energy storage apparatus and an energy storage system, where the energy storage apparatus has good mounting convenience.

In a first aspect, some embodiments of the present application provide an energy storage apparatus, and the energy storage apparatus includes a first module and a second module. The first module includes a first compartment and a first battery apparatus, and the first compartment accommodates the first battery apparatus. The second module includes a second compartment and a first heat exchange assembly, and the second compartment accommodates the first heat exchange assembly. The second module is stacked on an upper side of the first module, and the second compartment is connected to the first compartment.

In the above structure, the energy storage apparatus includes the first module and the second module stacked together, which respectively include the first compartment that accommodates the first battery apparatus and the second compartment that accommodates the first heat exchange assembly; therefore, when assembling the energy storage apparatus, it is only necessary to connect the first compartment of the assembled first module to the second compartment of the assembled second module, without having to mount various functional assemblies of the energy storage apparatus at a mounting site, which is conducive to improving the convenience of mounting the energy storage apparatus.

According to the energy storage apparatus provided in some embodiments of the present application, at least two first modules are provided, the at least two first modules are stacked in a vertical direction, and two adjacent first compartments are connected. By causing the energy storage apparatus to include at least two first modules arranged in the vertical direction, not only can more battery apparatuses be included in the energy storage apparatus, enabling the energy storage apparatus to store more electrical energy, but it also helps reduce the area occupied by the energy storage apparatus in a horizontal direction, thereby being conducive to improving the space utilization.

According to the energy storage apparatus provided in some embodiments of the present application, the center of gravity of the second module is configured to be located at the geometric center of the second module, so that the second module is less prone to swaying and shaking during hoisting, which is conducive to reducing the possibility of falling off or colliding with another component during hoisting.

According to the energy storage apparatus provided in some embodiments of the present application, the second module further includes a first electrical assembly. The second compartment accommodates the first electrical assembly, and the first electrical assembly is electrically connected to the first battery apparatus, thereby enabling the energy storage apparatus to operate normally.

According to the energy storage apparatus provided in some embodiments of the present application, the first electrical assembly and the first heat exchange assembly are arranged symmetrically with respect to the geometric center of the second module, which is conducive to causing the center of gravity of the second module closer to the geometric center of the second module, conducive to improving the stability of the second module during hoisting such that the second module is less prone to swaying and shaking during hoisting, and conducive to reducing the possibility of falling off or colliding with another component during hoisting.

According to the energy storage apparatus provided in some embodiments of the present application, the second compartment is provided with a first air vent and a second air vent. Both the first air vent and the second air vent are in communication with the interior of the second compartment, so that outside air can enter the interior of the second compartment and carry away heat inside the second compartment, enabling the heat dissipated by the first heat exchange assembly to the interior of the second compartment to be quickly dissipated to the outside air.

According to the energy storage apparatus provided in some embodiments of the present application, the second compartment includes a first top wall and a first side wall connected to each other, the second air vent is arranged on the first top wall, and the first air vent is arranged on the first side wall. By arranging the second air vent on the first top wall and arranging the first air vent on the first side wall, the second air vent and the first air vent are arranged on different wall structures, which can reduce the damage to the wall structure of the second compartment caused by the air vents and help improve the structural strength of the second compartment.

According to the energy storage apparatus provided in some embodiments of the present application, a projection of the second air vent in the vertical direction covers the geometric center of the second module. By causing the projection of the second air vent in the vertical direction to cover the geometric center of the second module, the second air vent can correspond to a central region of the second compartment. This not only allows the second air vent to better exhaust the air inside the second compartment, but also reduces the impact of opening the second air vent on the position of the center of gravity of the second module.

According to the energy storage apparatus provided in some embodiments of the present application, at least two second air vents are provided. Projections of the at least two second air vents in the vertical direction are symmetrical with respect to the geometric center of the second module, so that the at least two second air vents can be symmetrically in communication with the central region of the internal space of the second compartment. This not only allows the second air vents to better exhaust the air inside the second compartment, but also reduces the impact of opening the second air vents on the position of the center of gravity of the second module.

According to the energy storage apparatus provided in some embodiments of the present application, at least two first air vents are provided, and the at least two first air vents are arranged symmetrically with respect to the geometric center of the second module, which is conducive to reducing the impact of opening the first air vents on the position of the center of gravity of the second module.

According to the energy storage apparatus provided in some embodiments of the present application, the center of gravity of the first module is configured to be located at the geometric center of the first module, so that the first module is less prone to swaying and shaking during hoisting, which is conducive to reducing the possibility of falling off or colliding with another component during hoisting.

According to the energy storage apparatus provided in some embodiments of the present application, at least two first battery apparatuses are arranged in the first module, and the at least two first battery apparatuses are arranged symmetrically with respect to the geometric center of the first module, so that the center of gravity of the first module can be closer to the geometric center of the first module, which is conducive to improving the stability of the first module during hoisting.

According to the energy storage apparatus provided in some embodiments of the present application, the second module includes a maintenance assembly, and the maintenance assembly is arranged in the second compartment.

According to the energy storage apparatus provided in some embodiments of the present application, the first heat exchange assembly includes a radiator and a fan. The radiator is arranged in the second compartment, an air inlet of the fan is in communication with the second compartment, and an air outlet of the fan is in communication with the second air vent. The energy storage apparatus further includes a thermal management pipeline, and the thermal management pipeline communicates the radiator with the first battery apparatus. The thermal management pipeline allows the heat exchange medium to circulate between the radiator and a second heat exchanger, so that the first battery apparatus located in the first compartment can exchange heat with the outside through the radiator.

According to the energy storage apparatus provided in some embodiments of the present application, the first heat exchange assembly further includes a compressor and a circulating pump. The thermal management pipeline communicates the compressor, the radiator, the first battery apparatus, and the circulating pump in sequence. The compressor, the radiator, the first battery apparatus, and the circulating pump are arranged symmetrically with respect to the geometric center of the second module. This is conducive to making the center of gravity of the second module closer to the geometric center of the second module, conducive to improving the stability of the second module during hoisting such that the second module is less prone to swaying and shaking during hoisting, and conducive to reducing the possibility of falling off or colliding with another component during hoisting.

According to the energy storage apparatus provided in some embodiments of the present application, at least two compressors are provided, and the at least two compressors are arranged symmetrically with respect to the geometric center of the second module, which is conducive to causing the center of gravity of the second module closer to the geometric center of the second module, conducive to improving the stability of the second module during hoisting such that the second module is less prone to swaying and shaking during hoisting, and conducive to reducing the possibility of falling off or colliding with another component during hoisting.

According to the energy storage apparatus provided in some embodiments of the present application, at least two fans are provided, and the at least two fans are arranged symmetrically with respect to the geometric center of the second module, which is conducive to causing the center of gravity of the second module closer to the geometric center of the second module, conducive to improving the stability of the second module during hoisting such that the second module is less prone to swaying and shaking during hoisting, and conducive to reducing the possibility of falling off or colliding with another component during hoisting.

According to the energy storage apparatus provided in some embodiments of the present application, the first module includes at least two battery clusters, each of the battery clusters including at least one first battery apparatus. The thermal management pipeline connects the at least two battery clusters in series and/or in parallel, enabling the first battery apparatuses in the at least two battery clusters to be in communication with the first heat exchange assembly through the thermal management pipeline, thereby achieving heat dissipation of the first battery apparatuses in the at least two battery clusters.

According to the energy storage apparatus provided in some embodiments of the present application, the battery cluster includes at least two first battery apparatuses, and the thermal management pipeline connects the at least two first battery apparatuses in the battery cluster in series and/or in parallel, so that each of the first battery apparatuses in the same battery cluster can dissipate heat smoothly to the outside.

According to the energy storage apparatus provided in some embodiments of the present application, the thermal management pipeline includes a first pipe segment, a second pipe segment, and a connecting pipe segment. The first pipe segment is located in the first compartment, the second pipe segment is located in the second compartment, and the connecting pipe segment is connected between the first pipe segment and the second pipe segment and penetrates the wall of the second compartment and the wall of the first compartment. The above arrangement of the thermal management pipeline is conducive to reducing the total length of the pipeline, which not only helps reduce the manufacturing cost of the energy storage apparatus, but also helps shorten the travel of the heat exchange medium, thus being conducive to reducing energy consumption and operating costs.

According to the energy storage apparatus provided in some embodiments of the present application, the thermal management pipeline includes a third pipe segment, a fourth pipe segment, a fifth pipe segment, a first extension pipe segment, and a second extension pipe segment. The third pipe segment is located in the first compartment, the fourth pipe segment is located in the second compartment, and the fifth pipe segment is located outside both the second compartment and the first compartment. The first extension pipe segment is connected between the third pipe segment and the fifth pipe segment and penetrates the wall of the first compartment. The second extension pipe segment is connected between the fourth pipe segment and the fifth pipe segment and penetrates the wall of the second compartment. With the above arrangement, a part of pipeline of the thermal management pipeline is located outside the first compartment and the second compartment, so that the thermal management pipeline can be conveniently mounted on the outside of the first compartment and the second compartment, which is conducive to improving the convenience of mounting the energy storage apparatus.

According to the energy storage apparatus provided in some embodiments of the present application, a distance between the second extension pipe segment and a top end of the second compartment is less than a distance between the second extension pipe segment and a bottom end of the second compartment.

According to the energy storage apparatus provided in some embodiments of the present application, the second compartment is detachably connected to the first compartment.

According to the energy storage apparatus provided in some embodiments of the present application, the energy storage apparatus further includes a third module, and the third module is arranged at a lower side of the first module. The third module includes a third battery apparatus and a third compartment, where the third compartment accommodates the third battery apparatus, and the third compartment is connected to a lower side of the first compartment.

According to the energy storage apparatus provided in some embodiments of the present application, the energy storage apparatus further includes a fourth module stacked between the first module and the second module. The fourth module includes a second electrical assembly and a fourth compartment, where the fourth compartment accommodates the second electrical assembly, and the second electrical assembly is electrically connected to the first battery apparatus. The fourth module is stacked between the first module and the second module, which allows the fourth module to be relatively close to the first module. This facilitates better dissipation of heat generated by the second electrical assembly in the fourth module, which generates a large amount of heat, to the outside through the first heat exchange assembly of the first module.

According to the energy storage apparatus provided in some embodiments of the present application, the fourth compartment is connected between the first compartment and the second compartment in the vertical direction.

According to the energy storage apparatus provided in some embodiments of the present application, the first module further includes a power conversion apparatus, and the power conversion apparatus is arranged in the first compartment and electrically connected to the first battery apparatus. This facilitates mounting of the power conversion apparatus in the energy storage apparatus along with the first compartment, thereby being conducive to improving the convenience of mounting the energy storage apparatus.

According to the energy storage apparatus provided in some embodiments of the present application, the second module further includes a power conversion apparatus, and the power conversion apparatus is arranged in the second compartment and electrically connected to the first battery apparatus. This facilitates mounting of the power conversion apparatus in the energy storage apparatus along with the second compartment, thereby being conducive to improving the convenience of mounting the energy storage apparatus.

According to the energy storage apparatus provided in some embodiments of the present application, the second module further includes a fire tank, and the fire tank is arranged in the second compartment. The first module further includes a spraying member in communication with the fire tank, and the spraying member is arranged in the first compartment. This allows the fire tank to be mounted in the energy storage apparatus along with the second compartment, and the spraying member to be mounted in the energy storage apparatus along with the first compartment, which is conducive to improving the convenience of mounting the energy storage apparatus.

In a second aspect, some embodiments of the present application further provide an energy storage system. The energy storage system includes a power conversion apparatus and one or a plurality of energy storage apparatuses provided in any of the above technical solutions, and the power conversion apparatus is configured to electrically connect a power generation apparatus and the one or a plurality of energy storage apparatuses.

The technical solution provided in the embodiments of the present disclosure brings at least the following beneficial effects:
The present application provides an energy storage apparatus, and the energy storage apparatus includes a first module and a second module. The first module includes a first compartment and a first battery apparatus, and the first compartment accommodates the first battery apparatus. The second module includes a second compartment and a first heat exchange assembly, and the second compartment accommodates the first heat exchange assembly. The second module is stacked on an upper side of the first module, and the second compartment is connected to the first compartment. In the above structure, the energy storage apparatus includes the first module and the second module stacked together, which respectively include the first compartment that accommodates the first battery apparatus and the second compartment that accommodates the first heat exchange assembly; therefore, when assembling the energy storage apparatus, it is only necessary to connect the first compartment of the assembled first module to the second compartment of the assembled second module, without having to mount various functional assemblies of the energy storage apparatus at a mounting site, which is conducive to improving the convenience of mounting the energy storage apparatus.

### BRIEF DESCRIPTION OF THE DRAWINGS

Various other advantages and benefits will become clear for those of ordinary skill in the art by reading detailed descriptions of the following preferred implementation manners. The accompanying drawings are merely used for showing the preferred implementation manners, and are not construed as limiting the present application. In all accompanying drawings, identical components are represented by identical reference numerals.
FIG. 1 is a schematic structural view of an energy storage apparatus according to some embodiments of the present application;
FIG. 2 is a schematic view of a partial internal structure of an energy storage apparatus according to some embodiments of the present application;
FIG. 3 is a schematic structural view of a second module in an energy storage apparatus according to some embodiments of the present application;
FIG. 4 is a schematic structural view of a second module in an energy storage apparatus according to another embodiment of the present application;
FIG. 5 is a schematic view of a partial internal structure of a second module in an energy storage apparatus according to some embodiments of the present application;
FIG. 6 is a schematic view of a partial internal structure of a first module in an energy storage apparatus according to some embodiments of the present application;
FIG. 7 is a schematic structural view of a part of a thermal management pipeline in an energy storage apparatus according to some embodiments of the present application; and
FIG. 8 is a schematic structural view of a part of a thermal management pipeline in an energy storage apparatus according to another embodiment of the present application.

In the drawings:
1. First module; 11. First compartment; 12. First battery apparatus; 13. Battery cluster; 14. Spraying member;
2. Second Module; 20. Second compartment; 21. First air vent; 22. Second air vent; 23. First electrical assembly; 24. First top wall; 25. First side wall; 26. Radiator; 27. Fan; 28. Fire tank; 29. Power conversion apparatus; 210. Maintenance assembly; 211. Compressor; 212. Circulating pump; 213. Thermal management pipeline; 2131. First pipe segment; 2132. Second pipe segment; 2133. Connecting pipe segment; 2134. Third pipe segment; 2135. Fourth pipe segment; 2136. Fifth pipe segment; 2137. First extension pipe segment; 2138. Second extension pipe segment; 220. First heat exchange assembly;
3. Third module; 31. Third compartment; 32. Third battery apparatus;
4. Fourth module; 41. Fourth compartment; 42. Second electrical assembly.

### DETAILED DESCRIPTION

The embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

It should be noted that, unless otherwise specified, the technical or scientific terms used in the embodiments of the present application should have the usual meanings as understood by those skilled in the art to which the embodiments of the present application belong.

In the description of the embodiments of the present application, orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the accompanying drawing, and are only for the convenience of describing the embodiments of the present application and simplifying the description, and do not indicate or imply that the apparatus or element referred to must have a specific orientation or be constructed and operated in a specific orientation, and therefore cannot be construed as a restriction on the embodiments of the present application.

In addition, the technical terms such as "first" and "second" are used for descriptive purposes only, and cannot be construed as indicating or implying a relative importance, or implicitly specifying the number of the indicated technical features. In the description of the embodiments of the present application, the meaning of "a plurality of" is two or more, unless otherwise explicitly and specifically defined.

In the description of the embodiments of the present application, unless otherwise explicitly specified and defined, the technical terms "mount," "couple," "connect," "fix", and the like should be understood in a broad sense, for example, a fixed connection, a detachable connection, or an integral connection; or a mechanical connection, or an electrical connection; or a direct connection, an indirect connection through an intermediate medium, an internal communication of two elements, or interaction between two elements. For those of ordinary skill in the art, the specific meanings of the above terms in the embodiments of the present application can be understood according to specific situations.

In the description of the embodiments of the present application, unless otherwise explicitly specified and defined, the expression a first feature being "on" or "under" a second feature may be a case that the first feature is in direct contact with the second feature, or the first feature is in indirect contact with the second feature via an intermediate medium. Furthermore, the expression the first feature being "over", "above", and "on top of" the second feature may be a case that the first feature is directly above or obliquely above the second feature, or only means that the level of the first feature is higher than that of the second feature. The expression the first feature being "below," "underneath", or "under" the second feature may be a case that the first feature is directly underneath or obliquely underneath the second feature, or only means that the level of the first feature is lower than that of the second feature.

At present, from the development of market situation, the application of battery apparatuses is becoming increasingly more extensive. Battery apparatuses are not only applied in energy storage power supply systems such as water power, fire power, wind power, and solar power stations, but also widely applied in energy storage apparatuses, such as energy storage containers or energy storage cabinets. As the application fields of battery apparatuses continue to expand, people's requirements for the reliability of battery apparatuses are also constantly increasing.

The battery apparatus mentioned in the embodiments of the present application may include one or a plurality of battery cell assemblies configured to provide voltage and capacity. The battery cell assembly may include a plurality of battery cells, and the plurality of battery cells are connected in series or in parallel or in a parallel-series mode through a busbar component.

In some embodiments, a battery cell assembly is generally formed by arranging a plurality of battery cells.

As an example, the battery cell assembly can be a battery module, and the battery module is arranged by a plurality of battery cells and fixed to form an independent module. As an example, the battery module may be formed by binding a plurality of battery cells with a binding tape.

In some embodiments, the battery apparatus may include one or a plurality of battery packs, and the battery pack may include one or a plurality of battery cell assemblies. As an example, the battery pack includes a box body and one or a plurality of battery cell assemblies. The battery cell assemblies are accommodated in the box body, for example, in a fixed manner. As yet another example, the battery apparatus includes a plurality of battery packs, and the plurality of battery packs may be connected in series, in parallel, or in a parallel-series mode.

As an example, the box body may include a first box body and a second box body. The first box body and the second box body are fastened together to form an enclosure space inside the box body to accommodate the battery cell assembly. Enclosure here means covering or closing, and may be sealed or unsealed. The first box body may be a top cover or a bottom plate.

As an example, the box body may include a top cover, a frame, and a bottom plate. The top cover and the bottom plate are respectively connected to the frame, so that an enclosure space is formed inside the box body to accommodate the battery cell assembly.

In some embodiments, the plurality of battery packs included in the battery apparatus may constitute one or a plurality of battery clusters, and therefore, an energy storage apparatus provided in the embodiments of the present application includes one or a plurality of battery clusters to improve the voltage and capacity of the energy storage apparatus. The battery cluster may include a plurality of battery packs, and the plurality of battery packs are connected in series via a bus component to increase the voltage of the energy storage apparatus. When the energy storage apparatus includes a plurality of battery clusters, the battery clusters may be connected in series, in parallel, or in a parallel-series mode.

The energy storage apparatus may be used for an energy storage power station, a wind power generation system, a solar power generation system, a mobile power system, a temporary power supply system, or the like. Energy storage apparatuses can store electric energy as needed and output the electric energy at the appropriate time. For example, the energy storage apparatuses may store electric energy during low electricity consumption periods and provide electric energy to relevant users or electrical devices during peak electricity consumption periods. An energy storage system provided by the embodiments of the present application may be any power system that requires the energy storage apparatus.

In some embodiments, the energy storage apparatus is an energy storage container or an energy storage cabinet.

In some embodiments, the energy storage apparatus may include a cabinet body and one or a plurality of battery clusters, where the battery clusters are accommodated in the cabinet body.

In some embodiments, the energy storage apparatus may include modules such as a thermal management module, a master control module, a general control module, a power distribution module, and a fire protection module.

As an example, the thermal management module may include a liquid cooling unit, and the liquid cooling unit provides a cooling liquid for regulating the temperature of battery cells to each battery apparatus through a pipeline.

As an example, the master control module may be used as a battery management unit of the battery cluster, and is configured to monitor and manage the battery cluster. The master control module can monitor information such as the current, voltage, power, or temperature of the battery cluster. For example, it can control charging and discharging currents and voltages, and the like of the battery cluster. The master control module includes a slave battery management unit (SBMU), a fusion switch, and other modules.

As an example, the general control module may be used as a battery management unit of the energy storage apparatus, and is configured to monitor and manage the energy storage apparatus. The general control module can monitor current, voltage, power, state of charge, temperature, or other information of the energy storage apparatus. For example, it can control the charging and discharging currents and voltages, and the like of the energy storage apparatus. As an example, the general control module includes an insulation monitoring module (IMM), a master battery management unit (MBMU), Ethernet (ETH), a fiber optic conversion module, and other modules.

As an example, the fire protection system includes a control panel, a detector, an alarm apparatus, and the like, and is configured to conduct detection, give alarms, or extinguish fire in the energy storage system.

As an example, the power distribution apparatus may be configured to distribute power to the power consumption modules in the energy storage apparatus.

Currently, existing energy storage apparatuses are highly integrated, and provided with a variety of functional components. These functional components need to be assembled on a compartment of the energy storage apparatus, and therefore, it not only makes the design of these functional components more difficult, but also makes the assembling of the energy storage apparatus very inconvenient, which is not conducive to improving the convenience of mounting the energy storage apparatus.

In order to improve the convenience of mounting the energy storage apparatus, the present application provides an energy storage apparatus, and the energy storage apparatus includes a first module and a second module. The first module includes a first compartment and a first battery apparatus, and the first compartment accommodates the first battery apparatus. The second module includes a second compartment and a first heat exchange assembly, and the second compartment accommodates the first heat exchange assembly. The second module is stacked on an upper side of the first module, and the second compartment is connected to the first compartment. In the above structure, the energy storage apparatus includes the first module and the second module stacked together, and each includes the first compartment that accommodates the first battery apparatus and the second compartment that accommodates the first heat exchange assembly; therefore, when assembling the energy storage apparatus, it is only necessary to connect the first compartment of the assembled first module to the second compartment of the assembled second module, without having to mount various functional assemblies of the energy storage apparatus at a mounting site, which is conducive to improving the convenience of mounting the energy storage apparatus.

The energy storage apparatus described in the embodiments of the present application may be an energy storage container or an energy storage cabinet, and the energy storage apparatus described in the embodiments of the present application may be applied to an energy storage system. The energy storage system may include one or a plurality of energy storage apparatuses and a power conversion device (PowerConverter System (PCS)). The power conversion device is configured to be connected between a power generation device and the energy storage apparatus. The power generation device is configured to generate the electric energy, and the electric energy generated by the power generation device can be stored in the energy storage apparatus through the power conversion device. As an example, the power generation device may be particularly a solar panel, a hydroelectric power generation device, a thermal power generation device, a wind power generation device, and the like.

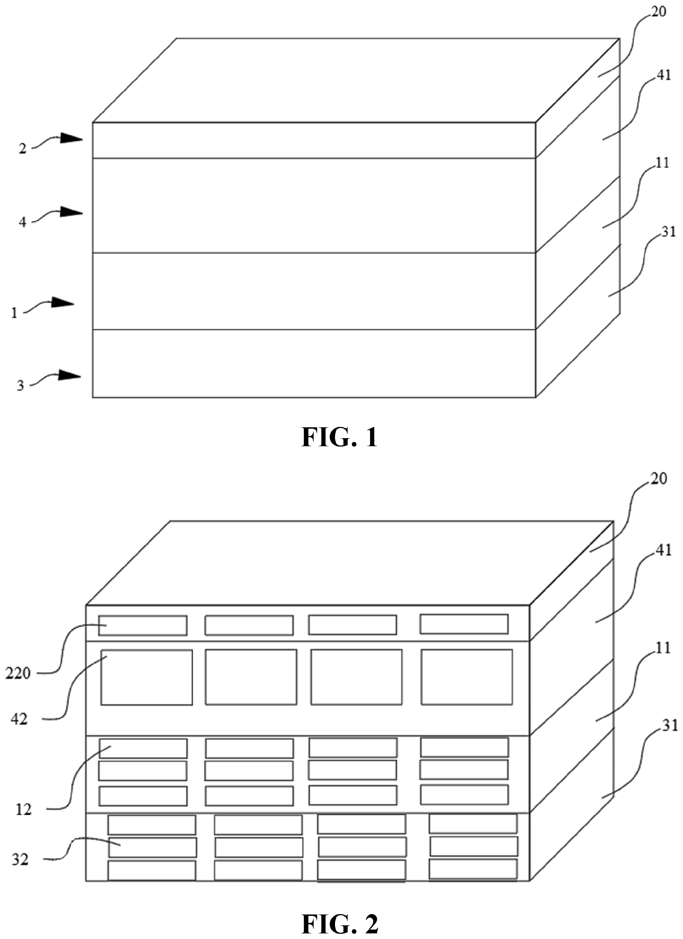

Some embodiments of the present application provide an energy storage apparatus, referring to FIG. 1, the energy storage apparatus includes a first module 1 and a second module 2. Referring to FIG. 2, the first module 1 includes a first compartment 11 and a first battery apparatus 12, and the first compartment 11 accommodates the first battery apparatus 12. The second module 2 includes a second compartment 20 and a first heat exchange assembly 220, and the second compartment 20 accommodates the first heat exchange assembly 220. The second module 2 is stacked on an upper side of the first module 1, and the second compartment 20 is connected to the first compartment 11.

The first module 1 and the second module 2 are different modules in the energy storage apparatus, each having a variety of functional components in the energy storage apparatus. This allows the energy storage apparatus composed of the first module 1 and the second module 2 to have a variety of functional components, thereby enabling the energy storage apparatus to effectively store electrical energy and output it when appropriate.

The functional components in the first module 1 and the second module 2 may all be assembled in a production workshop, so that when assembling the energy storage apparatus, it is only necessary to connect the modular first module 1 and second module 2, thereby saving time and inconvenience in mounting the various functional components on the mounting site.

The first compartment 11 may be a compartment structure in the energy storage apparatus that is capable of forming a hollow structure, where the hollow structure can serve as an accommodating space for accommodating the first battery apparatus 12 in the energy storage apparatus, and the first battery apparatus 12 is capable of being protected by the first compartment 11.

For example, the first battery apparatus 12 may be a part of battery apparatuses in the energy storage apparatus, and the energy storage apparatus further includes other battery apparatuses besides the first battery apparatus 12. The first compartment 11 and other compartments are used together to accommodate the battery apparatuses in the energy storage apparatus. The first battery apparatus 12 in the energy storage apparatus is accommodated in the first compartment 11, and the other battery apparatuses are accommodated in the other compartments.

The first compartment 11 accommodating the first battery apparatus 12 may be that the first battery apparatus 12 is connected to a wall of the first compartment 11 using a connecting member such as a bolt, a rivet, and a connecting pin; or the first battery apparatus 12 is first fixed to a shelf, and the shelf is connected to the wall of the first compartment 11 using a connecting member such as a bolt, a rivet, and a connecting pin. This reduces the possibility of the first battery apparatus 12 moving due to shaking in the first compartment 11, and helps reduce the possibility of damage to the first battery apparatus 12.

For example, at least two first battery apparatuses 12 may be provided in the first compartment 11, and the at least two battery apparatuses may be connected in series through a bus component to form a battery cluster 13.

The second compartment 20 may be a compartment structure in the energy storage apparatus that is capable of forming a hollow structure, where the hollow structure can serve as an accommodating space for accommodating the first heat exchange assembly 220 in the energy storage apparatus, and the first heat exchange assembly 220 is capable of being protected by the second compartment 20.

The first heat exchange assembly 220 may be a component configured to perform heat exchange between the battery apparatus in the energy storage apparatus and the outside. Alternatively, the heat exchange medium in the first heat exchange assembly 220 absorbs heat from the battery apparatus and dissipates the heat to the external environment through the first heat exchange assembly 220; or the heat exchange medium in the first heat exchange assembly 220 absorbs heat from the external environment through the first heat exchange assembly 220 and transfers the heat to the battery cells in the battery apparatus, so that the battery cells in the battery apparatus are at a suitable temperature, which is conducive to keeping the battery apparatus in good operating condition.

The second compartment 20 accommodating the first heat exchange assembly 220 may be that the first heat exchange assembly 220 is located in the second compartment 20 and the first heat exchange assembly 220 is connected to the wall of the second compartment 20 by a connecting member such as a bolt, a rivet, and a connecting pin. This reduces the possibility of the components in the first heat exchange assembly 220 moving due to shaking in the second compartment 20, and helps reduce the possibility of damage to the components in the first heat exchange assembly 220.

The second module 2 is stacked on the upper side of the first module 1 may refer to that the second module 2 is arranged on the upper side of the first module 1 in a vertical direction, so that the first module 1 and the second module 2 in the energy storage apparatus are arranged vertically. This helps reduce the area occupied by the energy storage apparatus in a horizontal direction and improve the utilization rate of space.

By connecting the second compartment 20 to the first compartment 11, the first module 1 and the second module 2 can be firmly connected, so that the energy storage apparatus can form an integral structure. The connection between the second compartment 20 and the first compartment 11 may be achieved by connecting the wall of the first compartment 11 to the wall of the second compartment 20 by using a connecting member such as a bolt, a rivet, and a connecting pin. This makes the connection between the first module 1 and the second module 2 more robust, which is conducive to improving the overall structural strength of the energy storage apparatus and the reliability of the energy storage apparatus.

For example, when the second module 2 is stacked on the upper side of the first module 1, the second module 2 can be lifted to the upper side of the first module 1 using a crane or another lifting device, and then the second compartment 20 is connected to the first compartment 11.

In the above structure, the energy storage apparatus includes the first module 1 and the second module 2 stacked together, and each includes the first compartment 11 that accommodates the first battery apparatus 12 and the second compartment 20 that accommodates the first heat exchange assembly 220; therefore, when assembling the energy storage apparatus, it is only necessary to connect the first compartment 11 of the assembled first module 1 to the second compartment 20 of the assembled second module 2, without having to mount various functional assemblies of the energy storage apparatus at a mounting site, which is conducive to improving the convenience of mounting the energy storage apparatus.

In some embodiments, at least two first modules 1 are provided, and the at least two first modules 1 are stacked in the vertical direction, with two adjacent first compartments 11 connected.

There are at least two first modules 1, which may refer to that the at least two first modules 1 are arranged in the vertical direction. By causing the energy storage apparatus to include at least two first modules 1, the energy storage apparatus is enabled to include more battery apparatuses, such that the energy storage apparatus can store more electrical energy. By arranging the at least two first modules 1 in the vertical direction, it is conducive to reduce the area occupied by the energy storage apparatus in the horizontal direction, and conducive to improving the utilization rate of space.

By connecting two adjacent first compartments 11, two adjacent first modules 1 can be firmly connected, so that the energy storage apparatus is capable of forming an integral structure. The connection of the two adjacent first module 1 may be that the wall of one of the first compartments 11 is connected to the wall of the other of the first compartments 11 by using a connecting member such as a bolt, a rivet, and a connecting pin. This makes the connection between the two adjacent first modules 1 more robust, which is conducive to improving the overall structural strength of the energy storage apparatus and the reliability of the energy storage apparatus.

In some embodiments, a center of gravity of the second module 2 is configured to be located at a geometric center of the second module 2.

The second module 2 is arranged on the upper side of the first module 1, and therefore, during the mounting of the energy storage apparatus, the second module 2 needs to be hoisted to the upper side of the first module 1. By configuring the center of gravity of the second module 2 to be located at the geometric center of the second module 2, the second module 2 is less prone to swaying and shaking during hoisting, which is conducive to reducing the possibility of falling off or colliding with another component during hoisting.

The center of gravity of the second module 2 being configured to be located at the geometric center of the second module 2 may be that the center of gravity of the second module 2 is configured to be located near the geometric center of the second module 2, that is, the center of gravity of the second module 2 is configured such that a distance to the geometric center of the second module 2 is less than or equal to a second preset distance. For example, the second preset distance may be 3 m, 2 m, or 1.5 m, and those skilled in the art can set the specific distance of the second preset distance according to the actual situation.

In some embodiments, the second module 2 further includes a first electrical assembly 23, the first electrical assembly 23 is accommodated in the second compartment 20, and the first electrical assembly 23 is electrically connected to the first battery apparatus 12.

For example, the first electrical assembly 23 may include electrical components such as an energy storage converter, a battery management system, an electronic control switch, and a fire controller. These electrical components are electrically connected to the battery apparatus, enabling the energy storage apparatus to operate normally.

The second compartment 20 accommodating the first electrical assembly 23 may be that the first electrical assembly 23 is located in the second compartment 20 and devices in the first electrical assembly 23 are connected to the wall of the second compartment 20 by a connecting member such as a bolt, a rivet, and a connecting pin. This reduces the possibility of the components in the first electrical assembly 23 moving due to shaking in the second compartment 20, and helps reduce the possibility of damage to the components in the first electrical assembly 23.

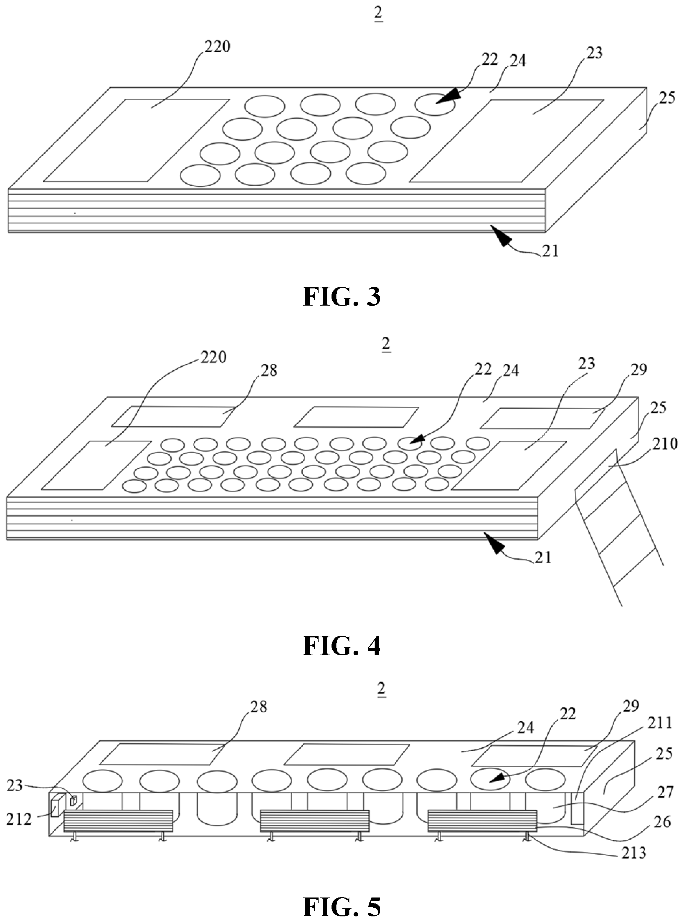

In some embodiments, referring to FIG. 3, the first electrical assembly 23 and the first heat exchange assembly 220 are arranged symmetrically with respect to the geometric center of the second module 2.

The components in the first electrical assembly 23 and the components in the first heat exchange assembly 220 are heavier components in the second module 2, and therefore, symmetrically arranging the first electrical assembly 23 and the first heat exchange assembly 220 with respect to the geometric center of the second module 2 helps make the center of gravity of the second module 2 closer to the geometric center of the second module 2. This is conducive to improving the stability of the second module 2 during hoisting so that the second module 2 is less prone to swaying and shaking, and is conducive to reducing the possibility of it falling off or colliding with another component during hoisting.

The first electrical assembly 23 and the first heat exchange assembly 220 being arranged symmetrically with respect to the geometric center of the second module 2 may be that the first electrical assembly 23 as a whole and the first heat exchange assembly 220 as a whole are arranged symmetrically on two sides of the geometric center of the second module 2, so that the center of gravity of the second module 2 is relatively close to the geometric center of the second module 2. Alternatively, the components in the first electrical assembly 23 and the components in the first heat exchange assembly 220 may be dispersed symmetrically on two sides of the geometric center of the second module 2. Alternatively, the components in the first electrical assembly 23 and the components in the first heat exchange assembly 220 may be dispersed, with the geometric center of the second module 2 as the center of a circle, around the outer side of the geometric center of the second module 2.

In some embodiments, the second compartment 20 is provided with a first air vent 21 and a second air vent 22, and both of the first air vent 21 and the second air vent 22 are in communication with the interior of the second compartment 20.

Both the first air vent 21 and the second air vent 22 may be windows opened on the wall of the second compartment 20 for ventilation, which can communicate the interior of the second compartment 20 with the outside. For example, the first air vent 21 may be a window for air intake, and the second air vent 22 may be a window for air exhaust, so that fresh air entering from the first air vent 21 can be exhausted to the outside through the second air vent 22.

By opening the first air vent 21 and the second air vent 22, that are used for ventilation, on the wall of the second compartment 20, outside air can enter the interior of the second compartment 20 and carry away the heat inside the second compartment 20, so that the heat dissipated from the first heat exchange assembly 220 into the interior of the second compartment 20 can be quickly dissipated into the outside air.

In some embodiments, the second compartment 20 includes a first top wall 24 and a first side wall 25 connected to each other, the second air vent 22 is arranged on the first top wall 24, and the first air vent 21 is arranged on the first side wall 25.

The first top wall 24 and the first side wall 25 may be wall structures in the second compartment 20, which are configured to enclose the accommodating space. Other devices such as the first heat exchange assembly 220 in the second module 2 may be connected to the first top wall 24 or the first side wall 25, so that the load of these devices can be transferred to the first module 1 through the first side wall 25 or the first side wall 25.

The first top wall 24 may be a wall structure located on a top side of the second compartment 20, which may be arranged to extend in the horizontal direction or to extend in a direction forming an angle of less than 90° with the horizontal direction. The first side wall 25 may form a hollow structure with openings at both ends, and the first top wall 24 is connected to a top end of the hollow structure.

By arranging the second air vent 22 on the first top wall 24 and arranging the first air vent 21 on the first side wall 25, the second air vent 22 and the first air vent 21 are arranged on different wall structures, which can reduce the damage to the wall structure of the second compartment 20 caused by the air vents and help improve the structural strength of the second compartment 20.

For example, the second air vent 22 may be used as an air outlet, which is arranged on the first top wall 24 so that the air in the second compartment 20 can be smoothly discharged from the second air vent when it is heated and rises.

In some embodiments, the second air vent 22 is arranged on the first side wall 25, and the first air vent 21 is arranged on the first top wall 24.

In some embodiments, a projection of the second air vent 22 in the vertical direction covers the geometric center of the second module 2.

By causing the projection of the second air vent 22 in the vertical direction to cover the geometric center of the second module 2, the second air vent 22 can correspond to a central region of the second compartment 20. This not only allows the second air vent 22 to better exhaust the air inside the second compartment 20, but also reduces the impact of opening the second air vent 22 on the position of the center of gravity of the second module 2.

In some embodiments, at least two second air vents 22 are provided, and projections of the at least two second air vents 22 in the vertical direction are symmetrical with respect to the geometric center of the second module 2.

By arranging the at least two second air vents 22, the air inside the second compartment 20 can be discharged more smoothly, which helps the second module 2 have good ventilation performance. By arranging the positions of the at least two second air vents 22 and causing the projections of the at least two second air vents 22 in the vertical direction to be symmetric with respect to the geometric center of the second module 2, the at least two second air vents 22 can be symmetrically in communication with the central region in the internal space of the second compartment 20. This not only allows the second air vent 22 to better exhaust the air inside the second compartment 20, but also reduces the impact of opening the second air vent 22 on the position of the center of gravity of the second module 2.

The projections of the at least two second air vents 22 in the vertical direction being arranged symmetrically with respect to the geometric center of the second module 2 may be that the projections of respective first air vents 21 of the at least two first air vents 21 in the vertical direction are arranged symmetrically on two sides of the geometric center of the second module 2; or that the projections of respective first air vents 21 of the at least two first air vents 21 in the vertical direction are dispersed, with the geometric center of the second module 2 as the center of a circle, around the outer side of the geometric center of the second module 2.

In some embodiments, at least two first air vents 21 are provided, and the at least two first air vents 21 are arranged symmetrically with respect to the geometric center of the second module 2.

The at least two first air vents 21 are arranged symmetrically with respect to the geometric center of the second module 2, which is conducive to reducing the impact of opening the first air vents 21 on the position of the center of gravity of the second module 2.

The at least two first air vents 21 being arranged symmetrically with respect to the geometric center of the second module 2 may be that the respective first air vents 21 of the at least two first air vents 21 are dispersed symmetrically on two sides of the geometric center of the second module 2; or that the respective first air vents 21 of the at least two first air vents 21 are dispersed, with the geometric center of the second module 2 as the center of circle, around the outer side of the geometric center of the second module 2.

In some embodiments, a center of gravity of the first module 1 is configured to be located at a geometric center of the first module 1.

There may be a plurality of first modules 1, and the plurality of first modules 1 are stacked in the vertical direction; therefore, the first module 1 located on an upper layer needs to be hoisted to an upper side of the first module 1 located on a lower layer. By configuring the center of gravity of the first module 1 to be located at the geometric center of the first module 1, the first module 1 is less prone to swaying and shaking during hoisting, which is conducive to reducing the possibility of falling off or colliding with another component during hoisting.

The center of gravity of the first module 1 being configured to be located at the geometric center of the first module 1 may be that the center of gravity of the first module 1 is configured to be located near the geometric center of the first module 1, that is, the center of gravity of the first module 1 is configured such that a distance to the geometric center of the first module 1 is less than or equal to a first preset distance. For example, the first preset distance may be 3 m, 2 m, or 1.5 m, and those skilled in the art can set the specific distance of the first preset distance according to the actual situation.

In some embodiments, at least two first battery apparatuses 12 are provided in the first module 1, and the at least two first battery apparatuses 12 are arranged symmetrically with respect to the geometric center of the first module 1.

By arranging the at least two first battery apparatuses 12 in the first module 1, and connecting the at least two first battery apparatuses 12 in series or in parallel, the first battery apparatuses 12 in the first module 1 can store more electrical energy. By symmetrically arranging the at least two first battery apparatuses 12 with respect to the geometric center of the first module 1, the center of gravity of the first module 1 can be closer to the geometric center of the first module 1, which is conducive to improving the stability of the first module 1 during hoisting.

In some embodiments, referring to FIG. 4, the second module 2 includes a maintenance assembly 210, and the maintenance assembly 210 is arranged in the second compartment 20.

The maintenance assembly 210 may be a device configured to maintain the energy storage apparatus. The maintenance assembly 210 being arranged in the second compartment 20 may be that the maintenance assembly 210 is arranged inside the second compartment 20 and connected to the wall of the second compartment 20, or the maintenance assembly 210 is located outside the second compartment 20 and connected to the wall of the second compartment 20.

For example, the maintenance assembly 210 may be connected to the wall of the second compartment 20 by using a connecting member such as a bolt, a rivet, and a connecting pin. In some embodiments, the maintenance assembly 210 may include a toolbox, a maintenance ladder, or other devices.

In some embodiments, the second module 2 further includes a display screen, and the display screen is arranged on the wall of the second compartment 20.

In some embodiments, referring to FIG. 5, the first heat exchange assembly 220 includes a radiator 26 and a fan 27. The radiator 26 is arranged inside the second compartment 20. An air inlet of the fan 27 is in communication with the second compartment 20, and an air outlet of the fan 27 is in communication with the second air vent 22. The energy storage apparatus further includes a thermal management pipeline 213, and the thermal management pipeline 213 connects the radiator 26 and the first battery apparatus 12.

The radiator 26 may be a heat exchanger arranged in the second compartment 20, which serves as a device in the first heat exchange assembly 220 for exchanging heat with the outside. The heat absorbed by a heat exchange medium in the heat exchange assembly from the battery apparatus may be dissipated to the external environment through the radiator 26. Outside air entering the second compartment 20 from the first air vent 21 may be discharged to the outside through the second air vent 22 after exchanging heat with the radiator 26.

The fan 27 may be a device configured to accelerate flow of the air. The air outlet of the fan 27 is in communication with the second ventilation port 22 to accelerate the speed at which the air in the second compartment 20 is discharged outward, which is conducive to improving the heat exchange effect of the radiator 26.

For example, the fan 27 may be located inside the second compartment 20 or outside the second compartment 20.

The battery apparatus is provided with a second heat exchanger that exchanges heat with the internal battery cells. The thermal management pipeline 213 may be a pipeline configured to communicate the radiator 26 with the second heat exchanger in the first battery apparatus 12, so that the heat exchange medium can circulate between the radiator 26 and the second heat exchanger, and therefore, the first battery apparatus 12 located in the first compartment 11 can exchange heat with the outside through the radiator 26.

In some embodiments, the first heat exchange assembly 220 further includes a compressor 211 and a circulating pump 212. The thermal management pipeline 213 communicates the compressor 211, the radiator 26, the first battery apparatus 12, and the circulating pump 212 in sequence. The compressor 211, the radiator 26, the first battery apparatus 12, and the circulating pump 212 are arranged symmetrically with respect to the geometric center of the second module 2.

The compressor 211 draws the heat exchange medium from the first battery apparatus 12 (a low-pressure side) and compresses it to cause its temperature and pressure to rise, and then pushes the heat exchange to the radiator 26 (a high-pressure side) so that the heat exchange medium can better dissipate heat to the outside. The circulating pump 212 can promote the flow of the heat exchange medium in the thermal management pipeline 213, which is conducive to improving the heat exchange efficiency of the first heat exchange assembly 220.

The thermal management pipeline 213 communicates the compressor 211, the radiator 26, the first battery apparatus 12, and the circulating pump 212 in sequence, so that the heat exchange medium can circulate and transfer the heat of the first battery apparatus 12 to the radiator 26 for heat dissipation.

By symmetrically arranging the compressor 211, the radiator 26, the first battery apparatus 12, and the circulating pump 212 with respect to the geometric center of the second module 2, it is conducive to causing the center of gravity of the second module 2 closer to the geometric center of the second module 2, conducive to improving the stability of the second module 2 during hoisting such that the second module 2 is less prone to swaying and shaking during hoisting, and conducive to reducing the possibility of falling off or colliding with another component during hoisting.

The compressor 211, the radiator 26, the first battery apparatus 12, and the circulating pump 212 being symmetrically arranged with respect to the geometric center of the second module 2 may be that the compressor 211, the radiator 26, the first battery apparatus 12, and the circulating pump 212 are symmetrically arranged on two sides of the geometric center of the second module 2; or the compressor 211, the radiator 26, the first battery apparatus 12, and the circulating pump 212 are dispersed, with the geometric center of the second module 2 as the center of a circle, around the outer side of the geometric center of the second module 2.

In some embodiments, at least two compressors 211 are provided, and the at least two compressors 211 are arranged symmetrically with respect to the geometric center of the second module 2.

By providing the at least two compressors 211, it is conducive to improving the working efficiency of the first heat exchange assembly 220. By symmetrically arranging the at least two compressors 211 symmetrically with respect to the geometric center of the second module 2, it is conducive to causing the center of gravity of the second module 2 closer to the geometric center of the second module 2, conducive to improving the stability of the second module 2 during hoisting such that the second module 2 is less prone to swaying and shaking during hoisting, and conducive to reducing the possibility of falling off or colliding with another component during hoisting.

The at least two compressors 211 being arranged symmetrically with respect to the geometric center of the second module 2 may be that the at least two compressors 211 are arranged symmetrically on two sides of the geometric center of the second module 2; or that the at least two compressors 211 are dispersed, with the geometric center of the second module 2 as the center of circle, around the outer side of the geometric center of the second module 2.

In some embodiments, at least two fans 27 are provided, and the at least two fans 27 are arranged symmetrically with respect to the geometric center of the second module 2.

By providing at least two fans 27, the at least two fans 27 are caused to have improved ventilation capacity, which is conducive to improving the air circulation in the second compartment 20 and improving the heat dissipation of the battery apparatus in the energy storage apparatus.

By symmetrically arranging the at least two fans 27 symmetrically with respect to the geometric center of the second module 2, it is conducive to causing the center of gravity of the second module 2 closer to the geometric center of the second module 2, conducive to improving the stability of the second module 2 during hoisting such that the second module 2 is less prone to swaying and shaking during hoisting, and conducive to reducing the possibility of falling off or colliding with another component during hoisting.

The at least two fans 27 being arranged symmetrically with respect to the geometric center of the second module 2 may be that the at least two fans 27 are arranged symmetrically on two sides of the geometric center of the second module 2; or that the at least two fans 27 are dispersed, with the geometric center of the second module 2 as the center of circle, around the outer side of the geometric center of the second module 2.

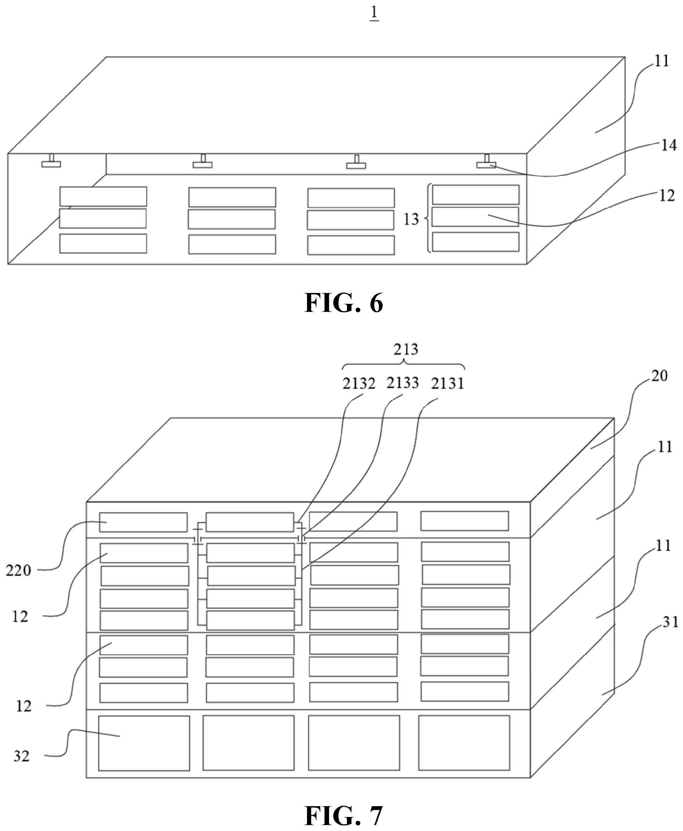

In some embodiments, referring to FIG. 6, the first module 1 includes at least two battery clusters 13, each of the battery clusters 13 includes at least one first battery apparatus 12, and the thermal management pipeline 213 connects the at least two battery clusters 13 in series and/or in parallel.

The battery cluster 13 may be a device that includes at least one first battery apparatus 12. The at least two battery clusters 13 in the first module 1 are connected in series and/or in parallel through the thermal management pipeline 213, which enables the first battery apparatuses 12 in the at least two battery clusters 13 to be in communication with the first heat exchange assembly 220 through the thermal management pipeline 213, thereby achieving heat dissipation of the first battery apparatus 12 in the at least two battery clusters 13.

For example, the at least two battery clusters 13 may be connected in series through the thermal management pipeline 213; or the at least two battery clusters 13 may be connected in parallel through the thermal management pipeline 213; or the at least two battery clusters 13 may be connected in a parallel-series mode through the thermal management pipeline 213, where the parallel-series connection means that the at least two battery clusters 13 are connected in both series and parallel.

In some embodiments, the battery cluster 13 includes at least two first battery apparatuses 12, and the thermal management pipeline 213 connects the at least two first battery apparatuses 12 in the battery cluster 13 in series and/or in parallel.

The thermal management pipeline 213 connects the at least two first battery apparatuses 12 in the same battery cluster 13 in series and/or in parallel, so that each first battery apparatus 12 in the same battery cluster 13 can dissipate heat smoothly to the outside.

For example, the at least two first battery apparatuses 12 in the same battery cluster 13 may be connected in series through the thermal management pipeline 213; the at least two first battery apparatuses 12 in the same battery cluster 13 may be connected in parallel through the thermal management pipeline 213; or the at least two first battery apparatuses 12 in the same battery cluster 13 may be connected in a parallel-series mode through the thermal management pipeline 213, where the parallel-series connection refers to that the at least two first battery apparatuses 12 are connected in both series and parallel.

In some embodiments, referring to FIG. 7, the thermal management pipeline 213 includes a first pipe segment 2131, a second pipe segment 2132, and a connecting pipe segment 2133. The first pipe segment 2131 is located in the first compartment 11, the second pipe segment 2132 is located in the second compartment 20, and the connecting pipe segment 2133 is connected between the first pipe segment 2131 and the second pipe segment 2132 and penetrates the wall of the second compartment 20 and the wall of the first compartment 11.

The first pipe segment 2131, the second pipe segment 2132, and the connecting pipe segment 2133 may be different pipe segments in the thermal management pipeline 213, and the three are in communication with one another to communicate the first battery apparatus 12 with the radiator 26. The first pipe segment 2131 may be a pipe segment located in the first compartment 11, which can be in communication with the first battery apparatus 12; the second pipe segment 2132 may be a pipe segment located in the second compartment 20, which can be in communication with the radiator 26; the connecting pipe segment 2133 is a pipe segment that connects the first pipe segment 2131 and the second pipe segment 2132, which may extend in the vertical direction and penetrate the wall of the second compartment 20 and the wall of the first compartment 11, so as to connect the first pipe segment 2131 and the second pipe segment 2132 to form a circulation pipeline.

The above arrangement of the thermal management pipeline 213 is conducive to reducing the total length of the pipeline, which not only helps reduce the manufacturing cost of the energy storage apparatus, but also helps shorten the travel of the heat exchange medium, thus being conducive to reducing energy consumption and operating costs.

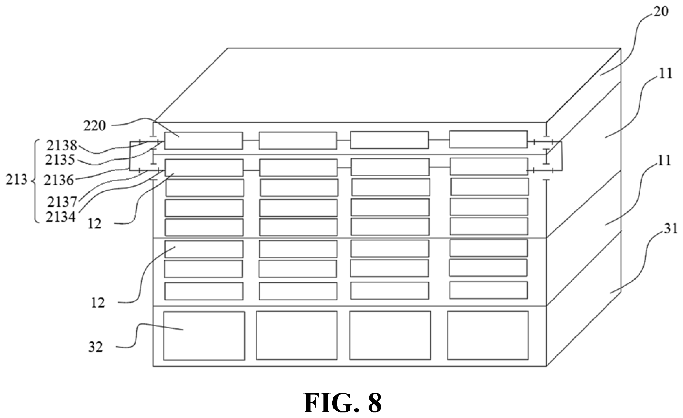

In some embodiments, referring to FIG. 8, the thermal management pipeline 213 includes a third pipe segment 2134, a fourth pipe segment 2135, a fifth pipe segment 2136, a first extension pipe segment 2137, and a second extension pipe segment 2138. The third pipe segment 2134 is located in the first compartment 11, the fourth pipe segment 2135 is located in the second compartment 20, and the fifth pipe segment 2136 is located outside the second compartment 20 and the first compartment 11. The first extension pipe segment 2137 is connected between the third pipe segment 2134 and the fifth pipe segment 2136 and penetrates the wall of the first compartment 11. The second extension pipe segment 2138 is connected between the fourth pipe segment 2135 and the fifth pipe segment 2136 and penetrates the wall of the second compartment 20.

The third pipe segment 2134, the fourth pipe segment 2135, the fifth pipe segment 2136, the first extension pipe segment 2137, and the second extension pipe segment 2138 are different pipe segments in the thermal management pipeline 213, which are in communication with one another to communicate the first battery apparatus 12 with the radiator 26. The third pipe segment 2134 may be a pipe segment located in the first compartment 11, which can be in communication with the first battery apparatus 12; the fourth pipe segment 2135 may be a pipe segment located in the second compartment 20, which can be in communication with the radiator 26; the fifth pipe segment 2136 may be a pipe segment located outside the second compartment 20 and the first compartment 11; the first extension pipe segment 2137 may be a pipe segment connecting the third pipe segment 2134 and the fifth pipe segment 2136, which can extend in the horizontal direction and penetrate the wall of the first compartment 11; the second extension pipe segment 2138 may be a pipe segment connecting the fourth pipe segment 2135 and the fifth pipe segment 2136, which can extend in the horizontal direction and penetrate the wall of the second compartment 20.

With the above arrangement, a part of pipeline of the thermal management pipeline 213 is located outside the first compartment 11 and the second compartment 20, so that the thermal management pipeline 213 can be conveniently mounted on the outside of the first compartment 11 and the second compartment 20, which is conducive to improving the convenience of mounting the energy storage apparatus.

In some embodiments, a distance between the second extension pipe segment 2138 and the top end of the second compartment 20 is less than a distance between the second extension pipe segment 2138 and the bottom end of the second compartment 20.

The first module 1 provided with the radiator 26 is located on the upper side of the second module 2, and therefore, by setting the distance between the second extension pipe segment 2138 and the top end of the second compartment 20 to be less than the distance between the second extension pipe segment 2138 and the bottom end of the second compartment 20 is conducive to shortening the length of the fifth pipe segment 2136, thereby reducing the cost and energy consumption of the energy storage apparatus.

For example, the distance between the second extension pipe segment 2138 and the top end of the second compartment 20 may be set to half the distance between the second extension pipe segment 2138 and the bottom end of the second compartment 20, so that the length of the fifth pipe segment 2136 is shorter, which helps reduce the cost and energy consumption of the energy storage apparatus.

In some embodiments, the second compartment 20 is detachably connected to the first compartment 11.

By detachably connecting the second compartment 20 to the first compartment 11, the first module 1 and the second module 2 can be easily disassembled and assembled, thereby facilitating the disassembling and assembling of the energy storage apparatus.

For example, the second compartment 20 and the first compartment 11 may be connected by a plug-in connection. Alternatively, a plug-in hole may be provided on the wall of the first compartment 11, and a plug-in post may be arranged on the wall of the first compartment 11. The second compartment 20 can be easily disassembled and assembled with the first compartment 11 through the cooperation of the plug-in post and the plug-in hole.

In some embodiments, the energy storage apparatus further includes a third module 3, and the third module 3 is arranged at a lower side of the first module 1. The third module 3 includes a third battery apparatus 32 and a third compartment 31, the third compartment 31 accommodates the third battery apparatus 32, and the third compartment 31 is connected to the lower side of the first compartment 11.

The third module 3 may be a module of the energy storage apparatus provided with a third battery apparatus 32. The third compartment 31 may be a compartment structure in the energy storage apparatus that is capable of forming a hollow structure, where the hollow structure can serve as an accommodating space for accommodating the third battery apparatus 32 in the energy storage apparatus, and the third battery apparatus 32 is capable of being protected by the third compartment 31.

The third compartment 31 being connected to the lower side of the first compartment 11 may be that the third compartment 31 is located on the lower side of the first compartment 11 and the third compartment 31 is connected to the first compartment 11. The connection between the third compartment 31 and the first compartment 11 may be the same as the connection between the second compartment 20 and the first compartment 11, or may be different from the connection between the second compartment 20 and the first compartment 11.

In some embodiments, the third compartment 31 connected to the lower side of the first compartment 11 may be arranged on the ground or on a bearing platform. For example, the third compartment 31 may be connected to the first compartment 11 by using a connecting member such as a rivet, a bolt, and a connecting pin, or connected to the first compartment 11 by means of welding, bonding, or other methods. In some embodiments, the connection between the third compartment 31 and the first compartment 11 may be a detachable connection, enabling the energy storage apparatus to be modularly assembled and disassembled.

For example, the third compartment 31 may be connected to the ground or a bearing platform by using a connecting member such as a rivet and a bolt, or connected to the ground or a bearing platform by means of bonding or other methods. In some embodiments, the connection between the third compartment 31 and the ground or the bearing platform may be a detachable connection, allowing the energy storage apparatus to be conveniently assembled and disassembled.

In some embodiments, the energy storage apparatus further includes a fourth module 4 stacked between the first module 1 and the second module 2. The fourth module 4 includes a second electrical assembly 42 and a fourth compartment 41. The fourth compartment 41 accommodates the second electrical assembly 42, and the second electrical assembly 42 is electrically connected to the first battery apparatus 12.

The fourth module 4 may be a module of the energy storage apparatus provided with the second electrical assembly 42. The fourth module 4 is stacked between the first module 1 and the second module 2, which allows the fourth module 4 to be relatively close to the first module 1. This facilitates better dissipation of heat generated by the second electrical assembly 42 in the fourth module 4, which generates a large amount of heat, to the outside through the first heat exchange assembly 220 of the first module 1.

The fourth compartment 41 may be a compartment structure in the energy storage apparatus that can form a hollow structure, and the hollow structure may serve as an accommodating space for accommodating the second electrical assembly 42, and the second electrical assembly 42 can be protected by the fourth compartment 41. For example, the second electrical assembly 42 may include electrical components such as an energy storage converter, a battery management system, an electronic control switch, and a fire controller. These electrical components are electrically connected to the battery apparatus, enabling the energy storage apparatus to operate normally.

In some embodiments, the fourth compartment 41 is connected between the first compartment 11 and the second compartment 20 in the vertical direction.

The fourth compartment 41 being connected between the first compartment 11 and the second compartment 20 in the vertical direction may be that the fourth compartment 41 is detachably connected between the first compartment 11 and the second compartment 20, so that the fourth module 4 can be conveniently disassembled in the energy storage apparatus.

In some embodiments, the first module 1 further includes a power conversion apparatus 29, and the power conversion apparatus 29 is arranged in the first compartment 11 and is electrically connected to the first battery apparatus 12.

By integrating the power conversion apparatus 29, which is electrically connected to the first battery apparatus 12, into the first module 1, the power conversion apparatus 29 may be arranged in the first compartment 11. This facilitates the mounting of the power conversion apparatus 29 along with the first compartment 11 in the energy storage apparatus, thereby improving the convenience of mounting the energy storage apparatus.

For example, the power conversion apparatus 29 may be connected to the wall of the first compartment 11 by means of a connecting member such as a bolt, a rivet, and a connecting pin.

In some embodiments, the second module 2 further includes a power conversion apparatus 29, and the power conversion apparatus 29 is arranged in the second compartment 20 and is electrically connected to the first battery apparatus 12.

By integrating the power conversion apparatus 29, which is electrically connected to the first battery apparatus 12, into the second module 2, the power conversion apparatus 29 may be arranged in the second compartment 20. This facilitates the mounting of the power conversion apparatus 29 along with the second compartment 20 in the energy storage apparatus, thereby improving the convenience of mounting the energy storage apparatus.

For example, the power conversion apparatus 29 may be connected to the wall of the second compartment 20 by means of a connecting member such as a bolt, a rivet, and a connecting pin.

In some embodiments, the second module 2 further includes a fire tank 28, and the fire tank 28 is arranged in the second compartment 20; and the first module 1 further includes a spraying member 14 in communication with the fire tank 28, and the spraying member 14 is arranged in the first compartment 11.

The second module 2 including the fire tank 28 may be that the fire tank 28 configured to store a fire extinguishing agent is integrated in the second module 2. By arranging the fire tank 28 in the second compartment 20, the fire tank 28 can be mounted in the energy storage apparatus along with the second compartment 20, which is conducive to improving the convenience of mounting the energy storage apparatus.

For example, the fire tank 28 may be connected to the wall of the second compartment 20 by means of a connecting member such as a bolt, a rivet, and a connecting pin.

The first module 1 including the spraying member 14 may be that the spraying member 14 in communication with the fire tank 28 is integrated in the first module 1. By arranging the spraying member 14 in the first compartment 11, the spraying member 14 can be mounted in the energy storage apparatus along with the first compartment 11, which is conducive to improving the convenience of mounting the energy storage apparatus.

For example, the spraying member 14 may be connected to the wall of the first compartment 11 by means of a connecting member such as a bolt, a rivet, and a connecting pin.

Some embodiments of the present application further provide an energy storage system. The energy storage system includes a power conversion apparatus 29 and one or a plurality of energy storage apparatuses provided in the above technical solutions, and the power conversion apparatus 29 is configured to electrically connect a power generation apparatus and the one or a plurality of energy storage apparatuses.

By using the power conversion apparatus 29 to electrically connect the power generation apparatus and the energy storage apparatus, the electrical energy generated by the power generation apparatus may be stored in the energy storage apparatus through the power conversion apparatus 29. As an example, the power generation device may be particularly a solar panel, a hydroelectric power generation device, a thermal power generation device, a wind power generation device, and the like. The energy storage system includes the energy storage apparatus provided by the above technical solution, and therefore, the energy storage system has good reliability.

For example, a plurality of energy storage apparatuses provided by the above technical solutions may be connected in parallel, so that the electrical energy generated by the power generation apparatus can be synchronously stored in the plurality of energy storage apparatuses through the power conversion apparatus 29.

Some embodiments of the present application provide an energy storage apparatus, and the energy storage apparatus includes a first module 1, a second module 2, a third module 3, and a fourth module 4. The first module 1 is provided with a first battery apparatus 12, the third module 3 is provided with a third battery apparatus 32, the second module 2 is provided with a first heat exchange assembly 220, and the fourth module 4 is provided with a second electrical assembly 42. There are at least two first modules 1, and the at least two first modules 1 are stacked in the vertical direction. In the vertical direction, the third module 3, the first module 1, the fourth module 4, and the second module 2 are stacked sequentially from bottom to top, and the third compartment 31, the first compartment 11, the fourth compartment 41, and the second compartment 20 are connected sequentially. In the second module 2, the first electrical assembly 23 and the first heat exchange assembly 220 are arranged symmetrically with respect to the geometric center of the second module 2. The second compartment 20 includes a first top wall 24 and a first side wall 25 connected to each other. The first top wall 24 is provided with at least two second air vents 22, and projections of the at least two second air vents 22 in the vertical direction are symmetrical with respect to the geometric center of the second module 2. The first side wall 25 has at least two first air vents 21, and the at least two first air vents 21 are arranged symmetrically with respect to the geometric center of the second module 2. In the above structure, the energy storage apparatus includes the first module 1 and the second module 2 stacked together, and each includes the first compartment 11 that accommodates the first battery apparatus 12 and the second compartment 20 that accommodates the first heat exchange assembly 220; therefore, when assembling the energy storage apparatus, it is only necessary to connect the first compartment 11 of the assembled first module 1 to the second compartment 20 of the assembled second module 2, without having to mount various functional assemblies of the energy storage apparatus at a mounting site, which is conducive to improving the convenience of mounting the energy storage apparatus.

Finally, it is to be noted that the above embodiments are only used for illustrating the technical solutions of the present application, not to limit them, and although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, and they should be covered by the scope of the claims and description of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. An energy storage apparatus, comprising:
a first module comprising a first compartment and a first battery apparatus, wherein the first compartment accommodates the first battery apparatus; and
a second module comprising a second compartment and a first heat exchange assembly, wherein the second compartment accommodates the first heat exchange assembly; the second module is stacked on an upper side of the first module, and the second compartment is connected to the first compartment.

2. The energy storage apparatus according to claim 1, wherein at least two first modules are provided, the at least two first modules are stacked in a vertical direction, and two adjacent first compartments are connected.

3. The energy storage apparatus according to claim 1 or 2, wherein a center of gravity of the second module is configured to be located at a geometric center of the second module.

4. The energy storage apparatus according to any one of claims 1 to 3, wherein the second module further comprises a first electrical assembly, the second compartment accommodates the first electrical assembly, and the first electrical assembly is electrically connected to the first battery apparatus.

5. The energy storage apparatus according to claim 4, wherein the first electrical assembly and the first heat exchange assembly are arranged symmetrically with respect to the geometric center of the second module.

6. The energy storage apparatus according to any one of claims 1 to 4, wherein the second compartment is provided with a first air vent and a second air vent, and both the first air vent and the second air vent are in communication with an interior of the second compartment.

7. The energy storage apparatus according to claim 6, wherein the second compartment comprises a first top wall and a first side wall connected to each other, the second air vent is arranged on the first top wall, and the first air vent is arranged on the first side wall.

8. The energy storage apparatus according to claim 7, wherein a projection of the second air vent in the vertical direction covers the geometric center of the second module.

9. The energy storage apparatus according to claim 7, wherein at least two second air vents are provided, and projections of the at least two second air vents in the vertical direction are symmetrical with respect to the geometric center of the second module.

10. The energy storage apparatus according to any one of claims 7 to 9, wherein at least two first air vents are provided, and the at least two first air vents are arranged symmetrically with respect to the geometric center of the second module.

11. The energy storage apparatus according to any one of claims 1 to 10, wherein a center of gravity of the first module is configured to be located at a geometric center of the first module.

12. The energy storage apparatus according to any one of claims 1 to 11, wherein at least two first battery apparatuses are provided in the first module, and the at least two first battery apparatuses are arranged symmetrically with respect to the geometric center of the first module.

13. The energy storage apparatus according to any one of claims 1 to 12, wherein the second module comprises a maintenance assembly, and the maintenance assembly is arranged in the second compartment.

14. The energy storage apparatus according to any one of claims 6 to 13, wherein the first heat exchange assembly comprises a radiator and a fan, the radiator is arranged in the second compartment, an air inlet of the fan is in communication with the second compartment, and an air outlet of the fan is in communication with the second air vent; and the energy storage apparatus further comprises a thermal management pipeline, and the thermal management pipeline communicates the radiator with the first battery apparatus.

15. The energy storage apparatus according to claim 14, wherein the first heat exchange assembly further comprises a compressor and a circulating pump, the thermal management pipeline communicates the compressor, the radiator, the first battery apparatus, and the circulating pump in sequence, and the compressor, the radiator, the first battery apparatus, and the circulating pump are arranged symmetrically with respect to the geometric center of the second module.

16. The energy storage apparatus according to claim 15, wherein at least two compressors are provided, and the at least two compressors are arranged symmetrically with respect to the geometric center of the second module.

17. The energy storage apparatus according to any one of claims 14 to 16, wherein at least two fans are provided, and the at least two fans are arranged symmetrically with respect to the geometric center of the second module.

18. The energy storage apparatus according to any one of claims 14 to 17, wherein the first module comprises at least two battery clusters, each of the battery clusters comprises at least one first battery apparatus, and the thermal management pipeline connects the at least two battery clusters in series and/or in parallel.

19. The energy storage apparatus according to claim 18, wherein the battery cluster comprises at least two first battery apparatuses, and the thermal management pipeline connects the at least two first battery apparatuses in the battery cluster in series and/or in parallel.

20. The energy storage apparatus according to any one of claims 14 to 19, wherein the thermal management pipeline comprises a first pipe segment, a second pipe segment, and a connecting pipe segment, the first pipe segment is located in the first compartment, the second pipe segment is located in the second compartment, and the connecting pipe segment is connected between the first pipe segment and the second pipe segment and penetrates a wall of the second compartment and a wall of the first compartment.

21. The energy storage apparatus according to any one of claims 14 to 19, wherein the thermal management pipeline comprises a third pipe segment, a fourth pipe segment, a fifth pipe segment, a first extension pipe segment, and a second extension pipe segment, the third pipe segment is located in the first compartment, the fourth pipe segment is located in the second compartment, the fifth pipe segment is located outside both the second compartment and the first compartment, the first extension pipe segment is connected between the third pipe segment and the fifth pipe segment and penetrates a wall of the first compartment, and the second extension pipe segment is connected between the fourth pipe segment and the fifth pipe segment and penetrates a wall of the second compartment.

22. The energy storage apparatus according to claim 21, wherein a distance between the second extension pipe segment and a top end of the second compartment is less than a distance between the second extension pipe segment and a bottom end of the second compartment.

23. The energy storage apparatus according to any one of claims 1 to 22, wherein the second compartment is detachably connected to the first compartment.

24. The energy storage apparatus according to any one of claims 1 to 23, wherein the energy storage apparatus further comprises a third module, the third module is arranged at a lower side of the first module, the third module comprises a third battery apparatus and a third compartment, the third compartment accommodates the third battery apparatus, and the third compartment is connected to a lower side of the first compartment.

25. The energy storage apparatus according to any one of claims 1 to 24, wherein the energy storage apparatus further comprises a fourth module stacked between the first module and the second module, the fourth module comprises a second electrical assembly and a fourth compartment, the fourth compartment accommodates the second electrical assembly, and the second electrical assembly is electrically connected to the first battery apparatus.

26. The energy storage apparatus according to claim 25, wherein the fourth compartment is connected between the first compartment and the second compartment in the vertical direction.

27. The energy storage apparatus according to any one of claims 1 to 26, wherein the first module further comprises a power conversion apparatus, and the power conversion apparatus is arranged in the first compartment and electrically connected to the first battery apparatus.

28. The energy storage apparatus according to any one of claims 1 to 26, wherein the second module further comprises a power conversion apparatus, and the power conversion apparatus is arranged in the second compartment and electrically connected to the first battery apparatus.

29. The energy storage apparatus according to any one of claims 1 to 28, wherein the second module further comprises a fire tank, and the fire tank is arranged in the second compartment; and the first module further comprises a spraying member in communication with the fire tank, and the spraying member is arranged in the first compartment.

30. An energy storage system, comprising:
a power conversion apparatus; and
one or a plurality of energy storage apparatuses according to any one of claims 1 to 29, wherein the power conversion apparatus is configured to electrically connect a power generation apparatus and one or a plurality of the energy storage apparatuses.
